(19) Europäisches Patentamt
European Patent Office
Office européen des brevets

(11) Veröffentlichungsnummer : **0 097 291**
**B1**

(12) # EUROPÄISCHE PATENTSCHRIFT

(45) Veröffentlichungstag der Patentschrift : **11.12.85**

(51) Int. Cl.⁴ : **C 09 B 67/42**

(21) Anmeldenummer : **83105684.1**

(22) Anmeldetag : **10.06.83**

(54) **Farbstoffpräparationen.**

(30) Priorität : **23.06.82 DE 3223333**
**24.07.82 DE 3227675**

(43) Veröffentlichungstag der Anmeldung :
**04.01.84 Patentblatt 84/01**

(45) Bekanntmachung des Hinweises auf die Patenterteilung : **11.12.85 Patentblatt 85/50**

(84) Benannte Vertragsstaaten :
**CH DE FR GB LI**

(56) Entgegenhaltungen :
**DE-A- 2 628 445**
**FR-A- 2 337 184**
**FR-A- 2 388 029**
**FR-A- 2 398 787**
**GB-A- 2 005 697**
**US-A- 3 980 602**

(73) Patentinhaber : **BAYER AG**
**Konzernverwaltung RP Patentabteilung**
**D-5090 Leverkusen 1 Bayerwerk (DE)**

(72) Erfinder : **Bornatsch, Wolfgang, Dr.**
**Baldurstrasse 21**
**D-5000 Köln 91 (DE)**
Erfinder : **Kuth, Robert, Dr.**
**Veit-Stoss-Strasse 12**
**D-5000 Köln 41 (DE)**
Erfinder : **Perrey, Hermann, Dr.**
**Auf der Rheinaue 8**
**D-4150 Krefeld 11 (DE)**

**EP 0 097 291 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind feste Präparationen enthaltend einen wasserunlöslichen Textil-Farbstoff, ein Dispergiermittel und ein polymeres Schutzkolloid, dadurch gekennzeichnet, daß dieses Schutzkolloid ein carboxylgruppenhaltiges Copolymerisat aus mindestens den drei folgenden Monomerverbindungsklassen ist :

a) eine α,β-ethylenisch ungesättigte Monocarbonsäure,
b) ein nicht-basischer Ester einer α,β-ethylenisch ungesättigten Monocarbonsäure und
c) Acrylnitril

Das Gewichtsverhältnis der Monomeren a) : b) : c) beträgt im allgemeinen 10-50 : 89-10 : 1-40, vorzugsweise 20-50 : 70-10 : 10-40.

Geeignete Monomere a) sind z. B. : Crotonsäure, Maleinsäure-$C_1$-$C_4$-(alkyl)-halbester sowie vorzugsweise Acrylsäure und Methacrylsäure.

Geeignete Monomere b) sind z. B. die gegebenenfalls durch OH substituierte $C_1$-$C_6$-Alkylester von Acryl- und Methacrylsäure, wie Methyl-, Ethyl-, n-Propyl-, n-Butyl-, Hydroxyethyl- und Hydroxypropylester.

Ganz besonders bevorzugt sind die Polymeren mit der folgenden Zusammensetzung :

Polymerisat 1 : 43 % Butylacrylat, 17 % Acrylnitril, 40 % Methacrylsäure
Polymerisat 2 : 43 % Butylacrylat, 17 % Acrylnitril, 40 % Acrylsäure
Polymerisat 3 : 43 % Butylacrylat, 20 % Methacrylsäure, 37 % Acrylnitril

Die aus den Monomeren a)-c) und gegebenenfalls weiteren copolymerisierbaren Monomeren zusammengesetzten Polymerisationsprodukte weisen Molgewichte von 1 000-500 000, vorzugsweise 1 500-150 000 auf. Ihr Einsatz erfolgt vorzugsweise in Form der wäßrigen Lösungen der Alkali- oder Ammoniumsalze. Die Herstellung der Copolymeren erfolgt nach an sich bekannten Methoden, beispielsweise durch Emulsionspolymerisation in Gegenwart von z. B. Dodecylmercaptan als Regler und in Gegenwart üblicher Emulgatoren.

Als wasserunlösliche Farbstoffe kommen handelsübliche Dispersionsfarbstoffe und -aufheller sowie Küpenfarbstoffe in Betracht. Bevorzugt sind Dispersionsfarbstoffe für das Färben aus wäßriger Flotte.

Als Dispergiermittel kommen anionische und nichtionische Typen in Betracht.

Geeignete anionische, oberflächenaktive Verbindungen sind in K. Lindner, Tenside-Textilhilfsmittel-Waschrohstoffe, 2. Auflage, Wiss. Verlagsgesellschaft, Stuttgart, 1964, Band I, S. 571-836, oder in Ullmanns Encyklopädie der technischen Chemie, 4. Auflage, Verlag Chemie, Weinheim/Bergstr., 1975, Band 10, S. 457-458, beschrieben.

Besonders geeignet sind solche, die aus den folgenden Stoffklassen stammen :

Kondensationsprodukte von Formaldehyd mit aromatischen Sulfonsäuren (z. B. Dinaphthylmethansulfonat), Fettsäuresalze, -sulfate, Sulfate von Fettsäureestern und -amiden, Alkylsulfate, Sulfate von alkoxylierten Alkoholen, Sulfate von acylierten Alkanolaminen, langkettige Alkylsulfonate ($C_6$-$C_{20}$), Fettsäureestersulfonate, Fettsäureamidsulfonate, Sulfobernsteinsäureester und -amide, ($C_6$-$C_{20}$-Alkyl)-acyltauride, perfluorierte Alkylsulfonate, Alkylbenzolsulfonate, Alkylnaphthalinsulfonate, Arylethersulfonate, Alkylbenzimidazolsulfonate, Alkoxycarboxylate, Alkylmalonsäuresalze, Alkylbernsteinsäuresalze, Seifen sowie Ligninsulfonate.

Ganz besonders bevorzugt sind :

Ölsäure-diethylaminsalz, Palmitinsulfonat, $C_{15}$-n-Alkylsulfonat, $C_{12}$-$C_{14}$-Alkylsulfonat, Di-Natrium-N-octadecylsulfosuccinamat, Tetra-Natrium-N-(1,2-dicarboxylethyl)-N-octadecylethylsulfosuccinamat, Natriumdicyclohexylsulfosuccinat, Di-Natrium-isodecylsulfosuccinat, Natrium-diamylsulfosuccinat, Natrium-dioctyl-sulfosuccinat, Natrium-dihexylsulfosuccinat, Dibutylnaphthalinsulfonat, n-Dodecylbenzolsulfonat, Dioctylglycerinethersulfat, Oleylalkoholsulfat.

Geeignete nichtionische Dispergiermittel sind beispielsweise polyoxalkylierte (vorzugsweise polyethoxylierte) Fettalkohole, Polyole, Mercaptane, Amine, Amide, Sulfoamide, Phenole, Fettsäuren, Naphthensäuren und Abietinsäure sowie Fettsäureester von Polyolen wie sie in Ullmanns Encyclopädie der technischen Chemie, 4. Aufl., Verlag Chemie, Weinheim, Bergstraße, 1975, Band 10, S. 456 beschrieben sind.

Unter « festen Präparationen » werden vor allem pulver- und tablettenförmige sowie granulierte Farbstoff-Formulierungen verstanden.

Die Herstellung dieser Präparationen erfolgt im allgemeinen in der Weise, daß man eine wäßrige, Dispergiermittel und Schutzkolloid enthaltende praktisch lösungsmittelfreie Dispersion eines feinverteilten Farbstoffs unter möglichst weitgehender Erhaltung der Teilchengröße trocknet, vorzugsweise sprühtrocknet, da dieses Trocknungsverfahren das technisch bedeutendste ist, das diese Forderung erfüllt.

Eine Variante des Verfahrens ist dadurch gekennzeichnet, daß man die wäßrige Suspension des Farbstoffs, vorteilhafterweise den feuchten Filterpreßkuchen, wie er unmittelbar bei der Farbstoffsynthese anfällt, mit dem Dispergiermittel und dem Schutzkolloid sowie gegebenenfalls anderen Hilfsmitteln (hydrotrope Mittel, Antischaummittel, Frostschutzmittel, Bakterizide, Fungizide u. dgl.) vermischt und das Gemisch bei pH 5-10, vorzugsweise 6, 5-8, 8 so lange in einer geeigneten Mühle mahlt, bis die gewünschte Feinverteilung erreicht ist und anschließend in einem Sprühtrockner versprüht. Ebenso kann der feuchte Filterpreßkuchen des Farbstoffs in Gegenwart der Dispergiermittel in einer geeigneten Mühle gemahlen, anschließend mit dem Schutzkolloid und den übrigen Hilfsmitteln (s. o.) versetzt und dann sprühgetrocknet werden.

Gemäß einer speziellen Verfahrensvariante zur Herstellung von den besonders bevorzugten Azofarbstoffpräparationen geht man in der Weise vor, daß man die Kupplungsreaktion in Gegenwart von Dispergiermitteln durchführt, nach beendeter Umsetzung einen pH von 5-10 vorzugsweise 6,5-8,0 einstellt, das Schutzkolloid zufügt und das erhaltene Gemisch — gegebenenfalls nach einer 30 bis 60-minütigen Aufheizung auf 50-95 °C — sprühtrocknet.

Die nach beliebigen Methoden erhaltenen Farbstoffpulver können gewünschtenfalls auch tablettiert werden.

Allen Verfahrensvarianten ist gemeinsam, daß sie — im Gegensatz zu den in DE-OS 2 816 539 beschriebenen Verfahren — ohne den Zusatz von organischen Lösungsmitteln auskommen.

Ein besonderer Vorzug dieser Verfahren liegt weiterhin darin, daß man im Vergleich zu zahlreichen konventionellen Methoden einen geringeren Mahlaufwand benötigt. Es genügt, die wäßrige Mischung der erfindungswesentlichen Komponenten so lange einer Zerkleinerung in einer Perl- oder Sandmühle zu unterwerfen, bis eine mittlere Teilchengröße erreicht ist, die größer ist als bei herkömmlichen Farbstoffpulvern, aber klein genug ist, um die Teilchen in einem üblichen Färbeverfahren hinreichend schnell in Lösung zu bringen, aus der der Farbstoff von der Faser aufgenommen werden kann.

Bei dem oben beschriebenen Spezialverfahren der Azokupplung kann eine Nachzerkleinerung sogar ganz entfallen, wobei allerdings ein größerer Gehalt an Inertsalzen und damit ein geringerer Farbstoffanteil im Präparat in Kauf genommen werden muß.

Im allgemeinen haben die neuen Präparate folgende Zusammensetzung hinsichtlich ihrer erfindungswesentlichen Komponenten (d. h. ohne Berücksichtigung von evtl. anwesenden Inertsalzen und sonstigen Hilfsmitteln):

30-98, vorzugsweise 60-95 Gew.-% Reinfarbstoff
1-35, vorzugsweise 2,5-20 Gew.-% Dispergiermittel
1-35, vorzugsweise 2,5-20 Gew.-% Schutzkolloid

In Abhängigkeit von der Herstellungsmethode ist der Farbstoffanteil in der Präparation bei

1) Zugabe von Dispergiermittel, Schutzkolloid und gegebenenfalls anderen Hilfsmitteln nach der Farbstoffisolierung = 30-98, vorzugsweise 60-95 Gew.-%,

2) Zugabe des Dispergiermittels während der Farbstoffherstellung = 30-60, vorzugsweise 35-55 Gew.-%.

Die neuen Farbstoffpräparationen eignen sich vorzüglich zur Herstellung von Farbstoff-Flotten zum Färben von Textilmaterialien bei Flottenverhältnissen von 1 : 5-1 : 100, vorzugsweise 1 : 10-1 : 40, da sie sich sehr leicht handhaben lassen.

Es genügt, die Präparate gegebenenfalls unter Erwärmen ohne weitere Zusätze in die wäßrige Flotte einzurühren, um eine stabile Farbstoffdispersion zu erhalten.

Bei den vorzugsweise zu verwendenden Dispersionsfarbstoffen können sogar färbebadinstabile Modifikationen eingesetzt werden, wodurch die sonst übliche Modifikationsumwandlung durch Tempern und/oder Chemikalien-Nachbehandlung entfällt. Die nach dem Färbevorgang erhaltenen Abwässer zeichnen sich durch einen niedrigeren CSB-Wert (chemischer Sauerstoff-Bedarf) aus, als die bei herkömmlich formierten Farbstoffen anfallenden Abwässer.

Weitere wichtige Vorzüge im Vergleich zu wäßrigen Präparationen, wie sie z. B. in DE-PS 2 816 539 beschrieben sind, sind durch den Wegfall des Verdünnungsmittels geringere Transport- und Lagerkosten bei praktisch unbegrenzter Lagerfähigkeit.

Gegenüber anderen bekannten festen Präparationen (vgl. z. B. DE-OS 2 100 439, DE-OS 2 027 537, GB-PS 717 840, GB-PS 818 750, US-PS 2 150 692, DE-OS 2 628 445) zeichnen sich die neuen Farbstoffe überraschenderweise dadurch aus, daß sie Färbebäder mit noch höherer Stabilität liefern, ohne die Färbeeigenschaften der Farbstoffe nachteilig zu beeinflüßen.

Insbesondere auf den vorzugsweise mit den neuen Präparaten zu behandelnden Polyesterfasermaterialien erhält man einwandfreie Färbungen ohne « Stippen » und sonstige Unegalitäten.

Beispiel 1

a) Diazotierung
93,6 g 3,4-Dichloranilin werden in eine Mischung aus
320 ml Salzsäure, techn. (36,5 g HCl in 100 ml) und
160 ml Wasser eingetragen und mindestens 2 Std. angerührt. Es wird mit
ca. 300 g Eis auf 0-5 °C abgekühlt. Anschließend wird innerhalb 30 Minuten

134,4 g Natriumnitritlösung (30 g $NaNO_2$ in 100 ml) zugefügt und 2 Std. bei 5 °C nachgerührt. Der Nitritüberschuß wird mit

30 ml Amidosulfonsäure (20 g in 100 ml) zerstört. Volumen : 850 ml. Die Diazotierung wird mit A-Kohle geklärt.

b) Kupplung und Polymerformierung

209,5 g 47 %iger Preßkuchen von N-Methyl-3-cyan-4-methyl-6-hydroxy-pyridon-2 werden unter Rühren in

640 ml Wasser mit

ca. 45 ml Natronlauge (40 g NaOH in 100 ml) bei pH 8,5 (20 °C) gelöst. Es werden

19,5 g Dinaphthylmethansulfonat (10 % bez. auf trockenen, reinen Farbstoff) und

19,5 g des Umsetzungsprodukts von Nonylphenol mit 20 Mol Ethylenoxid (10 % bez. auf trockenen, reinen Farbstoff) zugegeben. Das Pyridon wird durch Zugabe von

ca. 50 ml Salzsäure, techn. (36,5 g HCl in 100 ml) in feinverteilter Form gefällt (pH 1). Die Diazotierung wird innerhalb 40 Minuten so zugegeben, daß nie ein Überschuß an diazotiertem 3,4-Dichloranilin mit R-Salz-Lösung nachweisbar ist. Anschließend wird mit

ca. 140 ml Natronlauge (20 g NaOH in 100 ml) innerhalb 30 Minuten vorsichtig auf pH 7,0 gestellt. Es werden

100,5 ml Polymerisat 1 (29,1 %ig an Feststoff) (15 % bez. auf trockenen, reinen Farbstoff) in

200 ml Wasser mit

10 ml Natronlauge (40 g NaOH in 100 ml) gelöst und zugegeben. Es wird 1 Std. bei 80 °C nachgerührt.

Endvolumen : ca. 2,5 l

Feststoffgehalt : 13,6 %

c) Sprühtrocknung

Die Dispersion wird bei einer Eingangstemperatur von 180 °C und einer Austrittstemperatur von 80 °C sprühgetrocknet. Man erhält 453 g eines Pulvers, das 41 % reinen Farbstoff enthält (95 % Ausbeute der Theorie). Restfeuchte : ca. 4 %.

Zusammensetzung des Pulvers :

41 % Farbstoff
4,1 % Dinaphthylmethansulfonat
4,1 % Umsetzungsprodukt Nonylphenol mit 20 Mol Ethylenoxid
6,2 % Polymerisat 1 und
44,6 % Salz aus der Reaktion.

Beim Färben von Polyesterfasern unter HT-Bedingungen erhält man mit diesem Präparat — ohne Verwendung der sonst üblichen Hilfsmittel und Puffersubstanzen — eine kräftige, egale Gelbfärbung.

## Beispiel 2

a) Mahlung

In einer Anschlagbütte werden in

170 l Wasser unter Rühren

41,2 kg Polymerisat I (29,1 %ig an Feststoff, entspr. 10 % Polymer bez. auf trockenen, unbelegten Farbstoff) eingetragen und mit

ca. 2,3 l 40 %iger Natronlauge bei pH 7,5 in Lösung gebracht. Dann werden

12,0 kg Dinaphthylmethansulfonat (entspr. 10 % bez. auf trockenen, unbelegten Farbstoff), gefolgt von

137,1 kg 87,5 %igem Preßkuchen des Farbstoffs der Formel

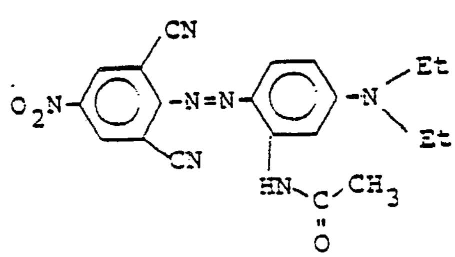

(entspr. 120 kg trockenem Farbstoff) untergerührt.

Volumen : ca. 400 l (mit Schaum)

Konzentration : ca. 35 %ig an Farbstoff.

Nach einer Vorzerkleinerung in der Korundscheibenmühle, wird die Dispersion in einer kontinuierlich arbeitenden Perlmühle mit 31/5er Perlen gemahlen. Allgemein genügen 4 Durchgänge. Die Temperatur sollte dabei 70 °C nicht übersteigen. Nach der Mahlung sollten die Teilchen eine Größe von 1-2 µm haben. Die Dispersion wird mit Spülwasser auf einen Farbstoffgehalt von 30 % verdünnt.

b) Sprühtrocknung
Die Dispersion wird bei einer Eingangstemperatur von 180 °C und einer Austrittstemperatur von 80 °C sprühgetrocknet.
Zusammensetzung des Pulvers :
83,3 % Farbstoff
8,3 % Polymerisat 1
8,4 % Dinaphthylmethansulfonat

Restfeuchte : ca. 4 %.

Auf Polyesterfasern erhält man mit diesem Mittel bei Anwendung üblicher Färbeverfahren eine gleichmäßige Blaufärbung.

Beispiel 3

a) Mahlung
In einer Anschlagbütte werden in
37,5 l Wasser unter Rühren
3,7 kg Dispergiermittel (Dinaphthylmethansulfonat) (entspr. 5 % bez. auf trockenen, unbelegten Farbstoff) und
25,3 kg Polymerisat 1 (29,1 %ig an Feststoff, entspr. 10 % bez. auf trockenen, unbelegten Farbstoff) eingetragen. Das Polymer wird durch Zugabe von
ca. 2,5 l 40 %iger Natronlauge bei pH 6,5 in Lösung gebracht. Dann werden
140,0 kg 28,3 %iger Preßkuchen des Farbstoffs der Formel

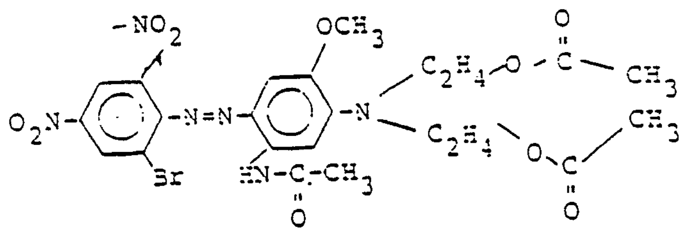

(entspr. 39,75 kg trockenem Farbstoff),
43,2 kg 70,0 %iger Preßkuchen des Farbstoffs der Formel

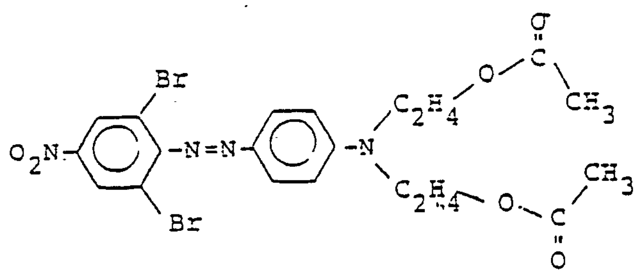

(entspr. 30,25 kg trockenem Farbstoff) und
8,45 kg 42,3 %iger Preßkuchen des Farbstoffs der Formel

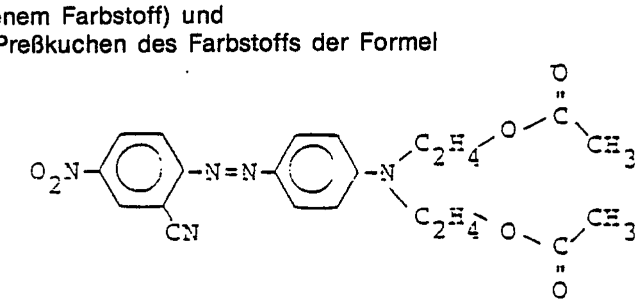

(entspr. 3,6 kg trockenem Farbstoff) portionsweise eingerührt.
Volumen : ca. 350 l (mit Schaum)
Feststoffgehalt : 26,6 %
Farbstoffkonzentration : 21 %.

Nach einer Vorzerkleinerung in der Korundscheibenmühle, wird die Dispersion in einer kontinuierlich arbeitenden Perlmühle mit 31/9er Perlen gemahlen. Allgemein genügen 4 Durchgänge. Es sollte dabei unter Kühlung gearbeitet werden, sodaß die Temperatur ca. 20 °C nicht übersteigt. Nach der Mahlung sollten die Teilchen einen Durchmesser von ca. 1 µm haben.

b) Sprühtrocknung
Die Dispersion wird bei einer Eingangstemperatur von 180 °C und einer Austrittstemperatur von 80 °C sprühgetrocknet.
Zusammensetzung des Pulvers :
87,0 % Farbstoff
8,7 % Polymerisat 1
4,3 % Dinaphthylmethansulfonat

Restfeuchte : ca. 4 %.

Polyesterfasern werden mit diesem Präparat in einem tiefen, schwarzen Farbton ohne irgendwelche Unegelitäten gefärbt.

Beispiel 4

a) Mahlung
In einer Anschlagbütte werden in
170 l Wasser unter Rühren
61,8 kg Polymerisat 3 (10 %ig an Feststoff, entspr. 5 % Polymer bez. auf trockenen, unbelegten Farbstoff) eingetragen und mit
ca. 2,3 l 40 %iger Natronlauge bei pH 6,8 in Lösung gebracht. Dann werden
12,0 kg Dodecylbenzolsulfonat (entspr. 10 % bez. auf trockenen, unbelegten Farbstoff), gefolgt von
147,25 kg 81,5 %igem Preßkuchen des Farbstoffs der Formel

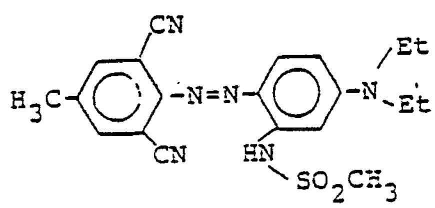

(entspr. 120 kg trockenem Farbstoff) untergerührt. Volumen : ca. 450 l (mit Schaum) Konzentration : ca. 35 %ig an Farbstoff.

Nach einer Vorzerkleinerung in der Korundscheibenmühle, wird die Dispersion in einer kontinuierlich arbeitenden Perlmühle mit 31/5er Perlen gemahlen. Allgemein genügen 4 Durchgänge. Die Temperatur sollte dabei 70 °C nicht übersteigen. Nach der Mahlung sollten die Teilchen eine Größe von ca. 1 µm haben. Die Dispersion wird mit Spülwasser auf einen Farbstoffgehalt von 30 % verdünnt.

b) Sprühtrockung
Die dispersion wird bei einer Eingangstemperatur von 180 °C und einer Austrittstemperatur von 80 °C sprühgetrocknet.
Zusammensetzung des Pulvers :
87,0 % Farbstoff
4,3 % Polymerisat 5
8,7 % Dodecylbenzolsulfonat

Restfeuchte : ca. 4 %

Auf Polyesterfasern erhält man damit eine einwandfreie Rotfärbung.

Beispiel 5

a) Mahlung
In einer Anschlagbütte werden in
40 l Wasser unter Rühren
6,0 kg Dinaphthylmethansulfonat (entspr. 5 % bez. auf trockenen, unbelegten Farbstoff) und
61,8 kg Polymerisat 2 (29,1 %ig an Feststoff, entspr. 15 % Polymer bzw. auf trocknen, unbelegten Feststoff) eingetragen. Das Polymer wird durch Zugabe von

ca. 2,3 l 40 %iger Natronlauge bei pH 7,5 in Lösung gebracht.
Dann werden
347,8 kg 34,5 %iger Preßkuchen des Farbstoffs der Formel

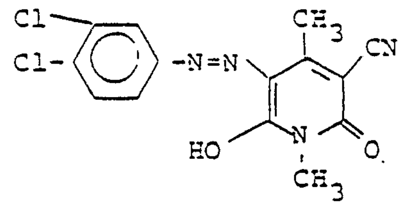

(entspr. 120 kg trockenem Farbstoff) portionsweise eingerührt.
Volumen : ca. 450 l (mit Schaum)
Konzentration : ca. 35 %ig an Farbstoff

Nach einer Vorzerkleinerung in der Korundscheibenmühle, wird die Dispersion in einer kontinuierlich arbeitenden Perlmühle mit 31/5er Perlen gemahlen. Allgemein genügen 4 Durchgänge. Die Temperatur sollte dabei 70 °C nicht übersteigen. Nach der Mahlung sollten die Teilchen eine Größe von ca. 1 µm haben. Die Dispersion wird mit Spülwasser auf einen Farbstoffgehalt von 30 % verdünnt.

b) Sprühtrockung
Die Dispersion wird bei einer Eingangstemperatur von 180 °C und einer Austrittstemperatur von 80 °C sprühgetrocknet.
Zusammensetzung des Pulvers :
83,3 % Farbstoff
12,5 % Polymerisat 2
4,2 % Dispergiermittel
Restfeuchte : ca. 4 %.
Polyesterfasern werden damit gleichmäßig gelb gefärbt.

Beispiel 6

118 g des nach der DE-OS 1 917 278 hergestellten Farbstoffs der Formel :

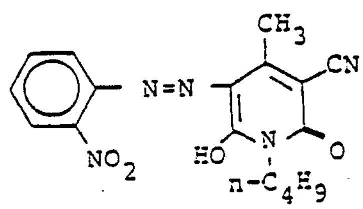

der in einer färbebadinstabilen Modifikation vorliegt in 1,2 l Wasser wird bei pH 7,5 versetzt mit 6,0 g Dioctylsulfobernsteinsäureester (5 % bez. auf trockenen Farbstoff), 2,4 g Dinaphthylmethansulfonat (2 % bez. auf trockenen Farbstoff) und einer Lösung von 17,7 g Polymerisat 1 (15 % bez. auf trockenen Farbstoff) in 100 ml Wasser bei pH 7,5. Die erhaltene Mischung wird wie in Beispiel 5 beschrieben perlgemahlen und sprühgetrocknet.
Zusammensetzung des Pulvers :
82,0 % Farbstoff
4,1 % Dioctylsulfobernsteinsäureester
1,6 % Dinaphthylmethansulfonat
12,3 % Polymerisat 1

Mit der so hergestellten Farbstoff-Präparation erhält man auf Polyesterfasern (sowohl auf Wickelkörper als auch auf Stückware) sehr gleichmäßige Gelbfärbungen mit hoher Fixierausbeute.

**Patentansprüche**

1. Festes Farbstoffpräparat enthaltend einen wasserunlöslichen Textilfarbstoff, ein Dispergiermittel, und ein polymeres Schutzkolloid, dadurch gekennzeichnet, daß dieses Schutzkolloid ein Copolymerisat aus mindestens
   a) einer α,β-ethylenisch ungesättigten Monocarbonsäure,
   b) einem nicht-basischen Ester einer α,β-ethylenisch ungesättigten Monocarbonsäure und
   c) Acrylnitril

ist.

2. Festes Farbstoffpräparat gemäß Anspruch 1, dadurch gekennzeichnet, daß das Gewichtsverhältnis der Monomerverbindungen a) : b) : c) 10-50 : 89-10 : 1-40 beträgt.

3. Festes Farbstoffpräparat gemäß Anspruch 1, dadurch gekennzeichnet, daß das Schutzkolloid ein Copolymerisat aus

a) (Meth)-Acrylsäure, b) (Meth)-Acrylsäureester und c) Acrylnitril ist.

4. Festes Farbstoffpräparat gemäß Anspruch 1, dadurch gekennzeichnet, daß das Copolymere ein Molgewicht von 1 000-500 000, vorzugsweise 1 500-150 000 aufweist.

5. Festes Farbstoffpräparat gemäß Anspruch 1, dadurch gekennzeichnet, daß der Gewichtsanteil der Farbstoffkomponente 30-98 % und des Dispergiermittels und des Schutzkolloids je 1-35 % — ohne Berücksichtigung von eventuell anwesenden sonstigen Hilfsmitteln — beträgt.

6. Verfahren zur Herstellung von festen Farbstoffpräparaten gemäß Anspruch 1, dadurch gekennzeichnet, daß man eine wäßrige Dispergiermittel und Schutzkolloid enthaltende praktisch lösungsmittelfreie Dispersion eines feinverteilten Farbstoffs unter möglichst weitgehender Erhaltung der Teilchengröße trocknet, vorzugsweise sprühtrocknet.

7. Verfahren nach Anspruch 6, dadurch gekennzeichnet, daß man die wäßrige Farbstoffdispersion in Gegenwart des Dispergiermittels und des Schutzkolloids bis zur gewünschten Teilchengröße vermahlt und anschließend sprühtrocknet.

8. Verfahren nach Anspruch 6, dadurch gekennzeichnet, daß man die wäßrige Farbstoffdispersion in Gegenwart eines Dispergiermittels bis zur gewünschten Teilchengröße vermahlt, das Schutzkolloid zusetzt und anschließend sprühtrocknet.

9. Verfahren nach Anspruch 6, dadurch gekennzeichnet, daß man das Dispergiermittel bereits während der Farbstoffherstellung zusetzt.

10. Verwendung der Farbstoffpräparate gemäß Anspruch 1 zum Färben von Textilmaterialien, vorzugsweise solchen aus Polyesterfasern.

**Claims**

1. Solid dyestuff formulation which contains a water-insoluble textile dyestuff, a dispersant and a polymeric protective colloid, characterised in that this protective colloid is a copolymer of at least

a) an α,β-ethylenically unsaturated monocarboxylic acid,

b) a non-basic ester of an α,β-ethylenically unsatured monocarboxylic acid, and

c) acrylonitrile.

2. Solid dyestuff formulation according to Claim 1, characterised in that the weight ratio of the monomer compounds, a) : b) : c), is 10-50 : 89-10 : 1-40.

3. Solid dyestuff formulation according to Claim 1, characterised in that the protective colloid is a copolymer of

a) (meth)acrylic acid, b) a (meth)acrylate and c) acrylonitrile.

4. Solid dyestuff formulation according to Claim 1, characterised in that the copolymer has a molecular weight of 1,000-500,000, preferably 1,500-150,000.

5. Solid dyestuff formulation according to Claim 1, characterised in that the weight fraction of the dyestuff component is 30-98 % and of the dispersant and of the protective colloid 1-35 % each — without taking into account other auxiliaries which may be present.

6. Process for preparing solid dyestuff formulations according to Claim 1, characterised in that an aqueous virtually solvent-free dispersion of a finely divided dyestuff, which dispersion contains a dispersant and a protective colloid, is dried, preferably spray-dried, while preserving the particle size as far as possible.

7. Process according to Claim 6, characterised in that the aqueous dyestuff dispersion is ground in the presence of the dispersant and of the protective colloid down to the particle size desired, and then spray-dried.

8. Process according to Claim 6, characterised in that the aqueous dyestuff dispersion is ground in the presence of a dispersant down to the particle size desired, the protective colloid is added, and the mixture is then spray-dried.

9. Process according to Claim 6, characterised in that the dispersant is already added during the preparation of the dyestuff.

10. Use of dyestuff formulations according to Claim 1, for dyeing textile materials, preferably those made of polyester fibres.

**Revendications**

1. Préparation solide de colorant, contenant un colorant pour textile insoluble dans l'eau, un dispersant et un colloïde protecteur, caractérisée en ce que ce colloïde protecteur est un copolymère d'au moins :

a) un acide monocarboxylique à insaturation éthylénique en α,β,

b) un ester non basique d'un acide monocarboxylique à insaturation en α,β, et

c) l'acrylonitrile.

2. Préparation solide de colorant selon la revendication 1, caractérisée en ce que le rapport pondéral entre les composés monomères a) : b) : c) est de 10 à 50 : 89 à 10 : 1 à 40.

3. Préparation solide de colorant selon la revendication 1, caractérisée en ce que le colloïde protecteur est un copolymère de :

a) l'acide (meth.)-acrylique, b) un ester de l'acide (meth.)-acrylique, et c) l'acrylonitrile.

4. Préparation solide de colorant selon la revendication 1, caractérisée en ce que le copolymère présente un poids moléculaire de 1 000 à 500 000, de préférence de 1 500 à 150 000.

5. Préparation solide de colorant selon la revendication 1, caractérisée en ce que la proportion pondérale du composant colorant est de 30 à 98 % et celle du dispersant et du colloïde protecteur est de 1 à 35 % dans chaque cas, sans tenir compte d'autres adjuvants éventuellement présents.

6. Procédé de fabrication de préparations solides de colorant selon la revendication 1, caractérisé en ce qu'on sèche, de préférence par atomisation, une dispersion aqueuse, pratiquement sans solvant, d'un colorant finement réparti, contenant du dispersant et du colloïde protecteur, en maintenant autant que possible la grosseur des particules.

7. Procédé selon la revendication 6 caractérisé en ce qu'on broie la dispersion aqueuse de colorant en présence du dispersant et du colloïde protecteur jusqu'à obtention de la grosseur voulue des particules, puis on la sèche par atomisation.

8. Procédé selon la revendication 6 caractérisé en ce qu'on broie la dispersion aqueuse de colorant en présence d'un dispersant jusqu'à obtention de la grosseur voulue des particules, on ajoute le colloïde protecteur puis l'on sèche par atomisation.

9. Procédé selon la revendication 6, caractérisé en ce qu'on ajoute le dispersant déjà pendant la préparation du colorant.

10. Utilisation des préparations de colorant selon la revendication 1 à la teinture de matières textiles, de préférence celles en fibres de polyester.